# EUROPEAN PATENT APPLICATION

(11) **EP 4 509 324 A1**
(43) Date of publication of application: **19.02.2025**
(21) Application number: 23788399.6
(22) Date of filing: 13.04.2023
(51) Int. Cl.: B41M 5/00, B41J 2/01, C09D 11/54

(54) **TREATMENT SOLUTION**

(30) Priority: 15.04.2022 JP 2022067910
(71) Applicant: Kao Corporation, Tokyo 103-8210 (JP)
(72) Inventor: TAMURA, Yuichi, Wakayama-shi, Wakayama 640-8580 (JP); INOUE, Masashi, Wakayama-shi, Wakayama 640-8580 (JP); EGUCHI, Tetsuya, Wakayama-shi, Wakayama 640-8580 (JP)
(74) Representative: Hoffmann Eitle
(86) International application number: PCT/JP2023/015041
(87) International publication number: WO 2023/199982

(57) **Abstract**

The present invention relates to [1] a treating solution containing 1,4-cyclohexanedimethanol, a polyvalent metal salt and water; [2] an ink set for ink-jet printing, which contains the treating solution described in the above [1], and an ink that contains a coloring material and water; and [3] an ink-jet printing method using the treating solution described in the above [1], which includes Step 1: applying the treating solution onto a printing medium to obtain a surface-treated printing medium, and Step 2: forming images on a treated surface of the surface-treated printing medium obtained in the step 1 in an ink-jet printing manner using an ink that contains a coloring material and water.

## Description

### FIELD OF THE INVENTION

The present invention relates to a treating solution, an ink set for ink-jet printing, and an ink-jet printing method.

### BACKGROUND OF THE INVENTION

Ink-jet printing methods have now widely prevailed in extensive application fields, such as printing techniques for office use, domestic use, etc., because of various advantages, such as no need of plate making, good adaptability to variable data or information printing, and non-contact with a medium to be printed. In recent years, there has also been made such an attempt that the ink-jet printing methods are used in further expanded application fields, such as commercial printing applications or industrial printing applications in which it is required to prepare a much larger volume of prints. Thus, it has now been required to print characters or images on printing media made of various materials by the ink-jet printing methods.

To meet these requirements, there has been proposed such a printing method in which a treating solution capable of intendedly aggregating solid components contained in ink, such as a coloring material, a resin, etc., is preliminarily applied onto the printing media to form an ink aggregating layer thereon before adhering the ink to the printing media.

For example, JP 2011-56884A (Patent Literature 1) discloses a treating solution that contains water, glycerin and at least one polyvalent metal salt selected from the group consisting of calcium nitrate and magnesium nitrate. In the Patent Literature 1, it is described that the treating solution has the effect of inhibiting occurrence of deterioration in optical density, bleeding and strike-through on images formed.

### SUMMARY OF THE INVENTION

The present invention relates to a treating solution containing 1,4-cyclohexanedimethanol, a polyvalent metal salt and water.

### DETAILED DESCRIPTION OF THE INVENTION

In general, in the case where images are formed on a low-permeability printing medium, such as a coated paper, etc., by an ink-jet printing method without using a treating solution, there tends to occur such a problem that respective dots of ink applied on the printing medium are allowed to spread therearound into not a true circular shape but a deflected shape, and also mingled together on the printing medium to cause color bleeding therebetween, so that the resulting printed material tends to suffer from deterioration in image uniformity. Whereas, in the case where images are formed on a high-permeability printing medium, such as a plain paper, etc., by an ink-jet printing method without using a treating solution, the ink tends to be penetrated into an inside of the printing medium, so that the resulting printed material tends to hardly exhibit high optical density.

On the other hand, when applying the treating solution onto the printing medium to form an ink aggregating layer thereon, the ink can be fixed on the surface of the ink aggregating layer, so that it is possible to improve optical density and color strength of the resulting printed material. However, it has been found that when printing images on the low-permeability printing medium, the technology described in the Patent Literature 1 fails to provide a printed material that is satisfactory in dot spreadability and image uniformity.

The present invention relates to a treating solution, an ink set for ink-jet printing and an ink-jet printing method, which are capable of providing a printed material having high printing quality irrespective of permeability of a printing medium.

The present inventors have noticed that by using a treating solution that contains 1,4-cyclohexanedimethanol, a polyvalent metal salt and water, it is possible to finely and uniformly precipitate the polyvalent metal salt on the printing medium by the action of the 1,4-cyclohexanedimethanol, and have found that it is possible to provide a printed material having high printing quality irrespective of permeability of the printing medium.

That is, the present invention relates to the following aspects [1] to [3].
[1] A treating solution containing 1,4-cyclohexanedimethanol, a polyvalent metal salt and water.
[2] An ink set for ink-jet printing, containing the treating solution according to the above aspect [1], and an ink that contains a coloring material and water.
[3] An ink-jet printing method including the following step 1 and step 2 using the treating solution according to the above aspect [1]:
   Step 1: applying the treating solution onto a printing medium to obtain a surface-treated printing medium; and
   Step 2: forming images on a treated surface of the surface-treated printing medium obtained in the step 1 in an ink-jet printing manner using an ink that contains a coloring material and water.

In accordance with the present invention, it is possible to attain high printing quality of the resulting printed material irrespective of permeability of a printing medium used therefor. More specifically, it is possible to provide a treating solution, an ink set for ink-jet printing and an ink-jet printing method, which are capable of providing a printed material having high image quality which is capable of exhibiting both of good dot spreadability and excellent image uniformity when using a low-permeability printing medium, and also providing a printed material having high optical density when using a high-permeability printing medium.

### [Treating Solution]

The treating solution of the present invention contains 1,4-cyclohexanedimethanol, a polyvalent metal salt and water.

Meanwhile, in the present invention, the expression "containing 1,4-cyclohexanedimethanol, a polyvalent metal salt and water" also means "blending 1,4-cyclohexanedimethanol, the polyvalent metal salt and water with each other".

The treating solution of the present invention is preferably used for treating a printing medium used in ink-jet printing in view of its capability of providing a printed material having high printing quality irrespective of permeability of the printing medium upon formation of images thereon by an ink-jet printing method. That is, treating solution of the present invention is preferably used as a pretreating solution for ink-jet printing.

According to the present invention, it is possible to attain high printing quality of the resulting printed material irrespective of permeability of a printing medium used therefor. The reason why the aforementioned advantageous effect can be attained by the present invention is considered as follows though it is not necessarily clearly determined yet.

That is, the 1,4-cyclohexanedimethanol contained in the treating solution of the present invention has a cyclic structure constituted of 6 carbon atoms at a center of its molecule, and contains hydroxy groups at opposite terminal ends of the cyclic structure. The cyclic structure constituted of 6 carbon atoms has high rigidity and acts for restricting motion of the hydroxy groups at opposite ends of the cyclic structure. For this reason, it is considered that the surface-activating effect caused by hydrophobicity attributed to the cyclic structure constituted of 6 carbon atoms and hydrophilicity attributed to the hydroxy groups at opposite terminal ends thereof is more strongly exhibited as compared to treating solutions containing a water-soluble organic solvent having a chain-like structure whose carbon number is similar to that of the cyclic structure. More specifically, it is considered that when treating a printing medium with the treating solution of the present invention, the polyvalent metal salt is present in the form of a fine and homogeneous precipitate on the printing medium owing to the high surface-activating effect of the 1,4-cyclohexanedimethanol. In consequence, it is considered that when allowing an ink for ink-jet printing to come into contact with the printing medium treated with the treating solution of the present invention, since the ink undergoes uniform and rapid increase in viscosity thereof, it is possible to retain the ink dots accurately at the preset positions, and since the dot size of the ink can be well controlled, it is possible to improve printing quality of the resulting printed material.

More concretely, it is considered that when applying the treating solution of the present invention onto a low-permeability printing medium, since the wettability of the ink against the low-permeability printing medium is increased owing to the strong surface-activating effect of the 1,4-cyclohexanedimethanol, the ink can be improved in dot spreadability, and since undesired fluctuation of dot spreading behavior of the ink which is attributed to micro non-uniformity of a surface condition of the printing medium is inhibited from occurring, the resulting printed material can be improved in image uniformity.

In addition, it is considered that when applying the treating solution of the present invention onto a high-permeability printing medium, although portions that are largely different in permeability from each other are present on the high-permeability printing medium, the ink can be prevented from penetrating into a deep inside of the printing medium even at such portions owing to the aforementioned uniform and rapid increase in viscosity of the ink, so that the resulting printed material can be inhibited from suffering from deterioration in optical density.

Meanwhile, in the present invention, whether the printing medium is low-permeable or high-permeable may be determined by a water absorption of the printing medium as measured by contacting the printing medium with pure water for 100 milliseconds. The water absorption may be measured using an automatic scanning absorptometer (for example, "KM500win" available from Kumagai Riki Kogyo Co., Ltd.) in terms of an amount of pure water transferred to the printing medium when contacting the printing medium with pure water for 100 milliseconds at 23 °C under a relative humidity of 50%.

The "low-permeability" as used herein is a concept including both of low permeability and non-permeability of the printing medium, and means that the water absorption of the printing medium is not less than 0 g/m² and not more than 7 g/m². Whereas, the "high-permeability" as used herein means that the water absorption of the printing medium is more than 7 g/m².

### < 1,4-Cyclohexanedimethanol>

The treating solution of the present invention contains 1,4-cyclohexanedimethanol.

By incorporating the 1,4-cyclohexanedimethanol in the treating solution of the present invention, it is possible to control wettability of the ink against the low-permeability printing medium. In addition, by allowing the 1,4-cyclohexanedimethanol to show a peculiar interaction with the polyvalent metal salt, it is possible to obtain a printed material having high image quality which is capable of exhibiting both of good dot spreadability and excellent image uniformity when using a low-permeability printing medium, and obtain a printed material having high optical density when using a high-permeability printing medium.

The 1,4-cyclohexanedimethanol is generally present in the form of two structural isomers including a cis-isomer and a trans-isomer. The structure of the 1,4-cyclohexanedimethanol used in the present invention is not particularly limited, and may be in the form of any of a cis-isomer solely, a trans-isomer solely, and a mixture of the cis-isomer and the trans-isomer.

The 1,4-cyclohexanedimethanol may also be either a synthesized product or a commercially available product. Examples of the commercially available product of the 1,4-cyclohexanedimethanol include those products available from Eastman Chemical Company and SK Chemicals.

### <Polyvalent Metal Salt>

The treating solution of the present invention contains a polyvalent metal salt.

In the treating solution of the present invention, by incorporating the polyvalent metal salt therein, it is possible to lower dispersibility of dispersoids present in the ink for ink-jet printing so as to allow the dispersoids to undergo aggregation thereof and thereby cause increase in viscosity or precipitation of the ink. For this reason, when using a low-permeability printing medium, by inhibiting occurrence of color bleeding owing to coalescence between dots of the ink and thereby enhancing uniformity of images formed thereon, it is possible to obtain a printed material having high image quality. Furthermore, when using a high-permeability printing medium, it is possible to improve optical density of the resulting printed material.

In the present invention, the dispersoids that are present in the ink for ink-jet printing include not only ink components that are actually dispersed in a solid state in the ink, such as a pigment, etc., but also other ink components that are normally present in a dissolved state in the ink, but undergo increase in viscosity or precipitation in association with loss of dissolvability thereof when allowing the ink to come into contact with the printing medium treated with the treating solution of the present invention. Specific examples of the other ink components that are normally present in a dissolved state in the ink for ink-jet printing, but undergo increase in viscosity or precipitation in association with loss of dissolvability thereof when allowing the ink to come into contact with the printing medium treated with the treating solution of the present invention include dyes, water-soluble resins and the like.

The reason why the dispersoids that are present in the ink for ink-jet printing are deteriorated in dispersibility or dissolvability when allowing the ink to come into contact with the printing medium treated with the treating solution of the present invention is considered as follows. That is, it is considered that when allowing the ink to come into contact with the printing medium treated with the treating solution of the present invention, precipitates of the polyvalent metal salt which are present on the printing medium are re-dissolved in the ink, and the polyvalent metal salt acts for reducing a thickness of an electrical double layer that has the effect of stabilizing the dispersoids present in the ink, so that it is not possible to inhibit the dispersoids from coming close to each other.

The polyvalent metal salt used herein is not particularly limited and may be optional as long as it is constituted of a di or more-valent polyvalent metal ion and an anion (a counter ion of the polyvalent metal ion). Examples of the di or more-valent polyvalent metal ion include ions of calcium, magnesium, copper, nickel, zinc, barium, aluminum, titanium, strontium, chromium, cobalt, iron and the like. Among these polyvalent metal ions constituting the polyvalent metal salt, from the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium, preferred are the divalent or trivalent metal ions, and more preferred are the divalent metal ions. Examples of the divalent metal ions include ions of elements belonging to Group 2 in the Periodic Table. Specific examples of the divalent metal ions include a magnesium ion, a calcium ion, an iron (II) ion and the like. Examples of the trivalent metal ions include an aluminum ion, an iron (III) ion and the like. Among these polyvalent metal ions constituting the polyvalent metal salt, from the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium, even more preferred is at least one metal ion selected from the group consisting of a magnesium ion, a calcium ion and an aluminum ion, further even more preferred is at least one metal ion selected from the group consisting of a magnesium ion and a calcium ion, and still further even more preferred is a magnesium ion.

As the anion constituting the polyvalent metal salt, there may be mentioned inorganic ions or organic ions.

Examples of the inorganic ions include monovalent anions, such as a nitrate ion, a halide ion, etc.; divalent anions, such as a sulfate ion, etc.; and the like.

Examples of the organic ions include organic acid ions, such as a carboxylate ion, etc.

Among these anions constituting the polyvalent metal salt, preferred are the inorganic ions, more preferred is at least one ion selected from the group consisting of a nitrate ion and a sulfate ion, and even more preferred is a nitrate ion.

From the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium, the polyvalent metal salt is preferably at least one metal salt selected from the group consisting of magnesium nitrate, magnesium sulfate, calcium nitrate and aluminum nitrate, more preferably at least one metal salt selected from the group consisting of magnesium nitrate, magnesium sulfate and calcium nitrate, even more preferably at least one metal salt selected from the group consisting of magnesium nitrate and calcium nitrate, and further even more preferably magnesium nitrate.

The polyvalent metal salt may contain water of hydration in a configuration of a raw material thereof.

These polyvalent metal salts may be used alone or in combination of any two or more thereof.

### <Water>

The treating solution of the present invention contains water.

The water used in the treating solution of the present invention is preferably pure water or deionized water from the viewpoint of inhibiting inclusion of unintended materials thereinto.

The treating solution of the present invention may also contain other components, such as a water-soluble organic solvent other than 1,4-cyclohexanedimethanol, a pH controller, a surfactant, a coloring material, a defoaming agent, an antiseptic and mildew-proof agent, a rust preventive, etc., if required.

### (Water-Soluble Organic Solvent other than 1,4-Cyclohexanedimethanol)

The treating solution of the present invention may also contain a water-soluble organic solvent other than 1,4-cyclohexanedimethanol. The other water-soluble organic solvent is not particularly limited, and may be appropriately selected according to the applications as aimed. Examples of the other water-soluble organic solvent include polyhydric alcohols; ethers, such as polyhydric alcohol alkyl ethers, polyhydric alcohol aryl ethers, etc.; nitrogen-containing heterocyclic compounds; amides; amines; sulfur-containing compounds; and the like.

Examples of the polyhydric alcohols include ethylene glycol, diethylene glycol, 1,2-propanediol, 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, 2-methyl-2,4-pentanediol, 3-methyl-1,5-pentanediol, 1,4-cyclohexanediol, 1,7-heptanediol, 1,8-octanediol, 1,2-octanediol, 1,9-nonanediol, 1,2-nonanediol, 1,10-decanediol, 1,2-decanediol, glycerin, 1,2,6-hexanetriol, 2-ethyl-1,3-hexanediol, 2-methyl-1,2,4-butanetriol, 1,2,4-butanetriol, 2-ethyl-1,2,3-butanetriol, 1,2,3-butanetriol, 2,2,4-trimethyl-1,3-pentanediol, petriol, and the like.

Examples of the polyhydric alcohol alkyl ethers include polyhydric alcohol monoalkyl ethers, such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, propylene glycol monomethyl ether, propylene glycol monobutyl ether, dipropylene glycol monoethyl ether, dipropylene glycol monobutyl ether, etc.

Examples of the polyhydric alcohol aryl ethers include ethylene glycol monophenyl ether and ethylene glycol monobenzyl ether.

Examples of the nitrogen-containing heterocyclic compounds include 2-pyrrolidone, Nmethyl-2-pyrrolidone, *N*-hydroxyethyl-2-pyrrolidone, 1,3-dimethyl-2-imidazolidinone and *ε⁻*caprolactam.

Examples of the amides include formamide, *N*-methyl formamide, *N-*dimethyl formamide, 3-methoxy-*N,N*-dimethyl propionamide and 3-butoxy-*N*,*N*-dimethyl propionamide.

Examples of the amines include monoethanolamine, diethanolamine, triethanolamine and triethylamine.

Examples of the sulfur-containing compounds include dimethyl sulfoxide, sulfolane and thiodiethanol.

Moreover, as the water-soluble organic solvent other than the aforementioned compounds, there may also be used, for example, propylene carbonate and ethylene carbonate.

These water-soluble organic solvents other than 1,4-cyclohexanedimethanol may be used alone or in combination of any two or more thereof.

### (pH Controller)

The treating solution of the present invention may also contain a pH controller.

The pH controller means an agent having a pH controlling capability of inhibiting fluctuation of a pH value of the treating solution and maintaining the pH value at a constant level.

The pH controller may be optionally selected according to the pH value of the treating solution of the present invention.

Examples of the pH controller used for basification of the treating solution of the present invention include alkanolamines, such as dimethyl ethanolamine, diethanolamine, triethanolamine, N-methyl diethanolamine, etc.; primary amines, secondary amines, tertiary amines and quaternary ammonium salts; aqueous ammonia; hydroxides of alkali metals, such as lithium hydroxide, sodium hydroxide, potassium hydroxide, etc.; carbonic acid salts of alkali metals, such as lithium carbonate, sodium carbonate, potassium carbonate, sodium bicarbonate, etc.; and the like.

Examples of the pH controller used for acidification of the treating solution of the present invention include inorganic acids, such as hydrochloric acid, sulfuric acid, nitric acid, phosphoric acid, boric acid, etc.; organic acids, such as acetic acid, citric acid, succinic acid, tartaric acid, malic acid, fumaric acid, malonic acid, ascorbic acid, glutamic acid, etc.; acetic acid salts of alkali metals, such as lithium acetate, sodium acetate, etc.; and the like.

These pH controllers may be used alone or in combination of any two or more thereof.

### (Surfactant)

The treating solution of the present invention may also contain a surfactant.

The surfactant is preferably a nonionic surfactant.

Examples of the nonionic surfactant include a polyoxyalkylene alkyl ether-based surfactant, an acetylene alcohol-based surfactant, such as an acetylene glycol-based surfactant, etc., a polyhydric alcohol-based surfactant, a fatty acid alkanol amide, a silicone-based surfactant, and a fluorine-based surfactant. Among these surfactants, preferred is the acetylene alcohol-based surfactant, and more preferred is the acetylene glycol-based surfactant.

Examples of the acetylene glycol-based surfactant include 2,4,7,9-tetramethyl-5-decyne-4,7-diol, 3,6-dimethyl-4-octyne-3,6-diol, and ethyleneoxide adducts of these diols.

Examples of the acetylene alcohol-based surfactant other than the acetylene glycol-based surfactant include 3,5-dimethyl-1-hexyne-3-ol, 2,4-dimethyl-5-hexyne-3-ol, and ethyleneoxide adducts of these monools.

The sum (n) of average molar numbers of addition of ethyleneoxy group (EO) of the aforementioned ethyleneoxide adducts is preferably not less than 0, and is also preferably not more than 20, and more preferably not more more than 10.

Examples of commercially available products of the nonionic surfactant include "SURFYNOL" series products available from Nissin Chemical Co., Ltd., and Air Products and Chemicals, Inc., and "ACETYLENOL" series products available from Kawaken Fine Chemicals Co., Ltd., and the like.

These surfactants may be used alone or in combination of any two or more thereof.

The treating solution of the present invention may also contain the below-mentioned coloring material unless the advantageous effects of the present invention are adversely affected by inclusion thereof. When the treating solution of the present invention contains the coloring material, from the viewpoint of attaining good water resistance, the coloring material is preferably a pigment or a hydrophobic dye, and from the viewpoint of exhibiting high weather resistance, the coloring material is preferably a pigment.

### (Composition of Treating Solution)

The content of the 1,4-cyclohexanedimethanol in the treating solution of the present invention is preferably not less than 1% by mass, more preferably not less than 3% by mass, even more preferably not less than 5% by mass, further even more preferably not less than 10% by mass, still further even more preferably not less than 15% by mass, still further even more preferably not less than 20% by mass, still further even more preferably not less than 25% by mass and yet still further even more preferably not less than 30% by mass from the viewpoint of obtaining a printed material having high image quality which is capable of exhibiting both of good dot spreadability and excellent image uniformity when using a low-permeability printing medium, and is also preferably not more than 65% by mass, more preferably not more than 60% by mass, even more preferably not more than 55% by mass, further even more preferably not more than 50% by mass, still further even more preferably not more than 45% by mass and yet still further even more preferably not more than 40% by mass from the viewpoint of improving optical density of the resulting printed material when using a high-permeability printing medium.

The content of the polyvalent metal salt in the treating solution of the present invention is preferably not less than 1% by mass, more preferably not less than 3% by mass, even more preferably not less than 5% by mass, further even more preferably not less than 10% by mass, still further even more preferably not less than 13% by mass and yet still further even more preferably not less than 15% by mass from the viewpoint of obtaining a printed material having high image quality which is excellent in image uniformity when using a low-permeability printing medium as well as from the viewpoint of improving optical density of the resulting printed material when using a high-permeability printing medium, and is also preferably not more than 30% by mass, more preferably not more than 25% by mass and even more preferably not more than 20% by mass from the viewpoint of obtaining a printed material having high image quality which is capable of exhibiting both of good dot spreadability and excellent image uniformity when using a low-permeability printing medium.

Incidentally, in the case where the polyvalent metal salt is used in the form of a hydrate that contains water of hydration as a configuration of a raw material of the polyvalent metal salt, the content of the polyvalent metal salt in the treating solution of the present invention means a content of an anhydrate of the polyvalent metal salt in the treating solution.

The content of water in the treating solution of the present invention is preferably not more than 85% by mass, more preferably not more than 80% by mass, even more preferably not more than 75% by mass, further even more preferably not more than 70% by mass, still further even more preferably not more than 65% by mass, still further even more preferably not more than 60% by mass and yet still further even more preferably not more than 55% by mass from the viewpoint of obtaining a printed material having high image quality which is capable of exhibiting both of good dot spreadability and excellent image uniformity when using a low-permeability printing medium, and is also preferably not less than 15% by mass, more preferably not less than 20% by mass, even more preferably not less than 25% by mass, further even more preferably not less than 30% by mass, still further even more preferably not less than 35% by mass, still further even more preferably not less than 40% by mass and yet still further even more preferably not less than 45% by mass from the viewpoint of improving optical density of the resulting printed material when using a high-permeability printing medium.

Incidentally, in the case where the polyvalent metal salt is used in the form of a hydrate that contains water of hydration as a configuration of a raw material of the polyvalent metal salt, the content of water in the treating solution of the present invention means a water content including the content of the water derived from the hydrate of the polyvalent metal salt.

The mass ratio of the content of the polyvalent metal salt to the content of the 1,4-cyclohexanedimethanol [polyvalent metal salt/1,4-cyclohexanedimethanol] in the treating solution of the present invention (hereinafter also referred to merely as a "mass ratio [polyvalent metal salt/1,4-cyclohexanedimethanol]) is preferably not less than 0.10, more preferably not less than 0.20, even more preferably not less than 0.30, further even more preferably not less than 0.35 and still further even more preferably not less than 0.40 from the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium, and is also preferably not more than 4.00, more preferably not more than 3.20, even more more preferably not more than 3.00, further even more preferably not more than 2.20, still further even more preferably not more than 1.50, still further even more preferably not more than 1.00, still further even more preferably not more than 0.80 and yet still further even more preferably not more than 0.50 from the same viewpoints as described above.

The mass ratio of the content of the 1,4-cyclohexanedimethanol to the content of water [1,4-cyclohexanedimethanol/water] in the treating solution of the present invention is preferably not less than 0.03, more preferably not less than 0.10, even more preferably not less than 0.30 and further even more preferably not less than 0.50 from the viewpoint of obtaining a printed material having high image quality which is capable of exhibiting both of good dot spreadability and excellent image uniformity when using a low-permeability printing medium, and is also preferably not more than 2.00, more preferably not more than 1.50, even more preferably not more than 1.00, further even more preferably not more than 0.90 and still further even more preferably not more than 0.80 from the viewpoint of improving optical density of the resulting printed material when using a high-permeability printing medium.

The content of the water-soluble organic solvent other than 1,4-cyclohexanedimethanol in the treating solution of the present invention is preferably not more than 20% by mass, more preferably not more than 10% by mass, even more preferably not more than 5% by mass, further even more preferably not more than 3% by mass and still further even more preferably not more than 1% by mass from the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium. Incidentally, in the case where two or more water-soluble organic solvents other than 1,4-cyclohexanedimethanol are used in the treating solution of the present invention, the above content of the water-soluble organic solvent other than 1,4-cyclohexanedimethanol means a total content of the two or more water-soluble organic solvents other than 1,4-cyclohexanedimethanol.

The ratio of the content of the 1,4-cyclohexanedimethanol to the total content of the 1,4-cyclohexanedimethanol and the water-soluble organic solvent other than 1,4-cyclohexanedimethanol in the treating solution of the present invention, i.e., the ratio of the content of the 1,4-cyclohexanedimethanol to the total content of all the water-soluble organic solvents contained in the treating solution of the present invention, is preferably not less than 50% by mass, more preferably not less than 70% by mass, even more preferably not less than 90% by mass, further even more preferably not less than 99% by mass and still further even more preferably 100% by mass from the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium.

The content of the coloring material in the treating solution of the present invention is preferably not more than 1% by mass, more preferably not more than 0.1% by mass, even more preferably not more than 0.01% by mass and further even more preferably 0% by mass. That is, it is most preferred that no coloring material be contained in the treating solution of the present invention.

When the content of the coloring material in the treating solution of the present invention lies within the aforementioned range, it is possible to form images without giving any adverse effects on a hue of ink when conducting ink-jet printing using the treating solution along with the ink for ink-jet printing.

The viscosity of the treating solution of the present invention is not particularly limited. However, the viscosity of the treating solution of the present invention as measured at 25 °C is preferably not less than 1 mPa•s, more preferably not less than 3 mPa•s and even more preferably not less than 6 mPa•s, and is also preferably not more than 100 mPa•s, more preferably not more than 80 mPa•s and even more preferably not more than 55 mPa•s, from the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium. Meanwhile, the viscosity of the treating solution of the present invention may be measured by the method described in Examples below.

The pH value of the treating solution of the present invention as measured at 20 °C is preferably not less than 3.0, more preferably not less than 3.5 and even more preferably not less than 4.0, and is also preferably not more than 10.5, more preferably not more than 10.0 and even more preferably not more than 9.5. Meanwhile, the pH value of the treating solution of the present invention may be measured by the method described in Examples below.

### (Preparation of Treating Solution)

The treating solution of the present invention as used herein may be prepared by appropriately mixing 1,4-cyclohexanedimethanol, the polyvalent metal salt, water and, if required, the aforementioned other components together. The pH value of the treating solution may be adequately controlled using the aforementioned pH controller.

### [Ink Set for Ink-Jet Printing]

### <Ink for Ink-Jet Printing>

In the following, the ink for ink-jet printing which may be applied to a printing medium treated with the treating solution of the present invention (hereinafter also referred to as a "surface-treated printing medium") is explained.

The ink for ink-jet printing preferably contains a coloring material and water from the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium. That is, in the present invention, the treating solution can be used as an ink set for ink-jet printing in combination with the ink containing the coloring material and water.

### [Coloring Material]

The coloring material used in the ink for ink-jet printing may be either a dye or a pigment. Among these materials, the pigment is preferably used as the coloring material from the viewpoint of attaining good water resistance, good light resistance, good weather resistance and good gas resistance, etc.

The pigment used in the present invention may be either a conventionally known organic pigment or a conventionally known inorganic pigment. These pigments may be used alone or in combination of any two or more kinds thereof, or may also be used in the form of a mixed crystal.

Examples of the inorganic pigment include titanium oxide, iron oxide, calcium carbonate, barium sulfate, aluminum hydroxide, barium yellow, cadmium red, chrome yellow and the like. In addition, as the inorganic pigment, there may also be used carbon blacks that are produced by conventionally known methods, such as a contact method, a furnace method, a thermal method, etc.

Examples of the organic pigment include azo pigments; polycyclic pigments (such as, e.g., phthalocyanine pigments, perylene pigments, perinone pigments, anthraquinone pigments, quinacridone pigments, dioxazine pigments, indigo pigments, thioindigo pigments, isoindolinone pigments, quinophthalone pigments, etc.), dye chelates (such as, e.g., basic dye-type chelates, acid dye-type chelates, etc.), nitro pigments, nitroso pigments, aniline blacks, and the like.

The pigments may be used in the form of hollow particles, such as resin hollow particles, inorganic hollow particles etc. In addition, there may also be used pigments having a glossy color, such as a gold color, a silver color, etc., or metallic pigments.

Specific examples of the pigments for a black ink include carbon blacks (C.I. Pigment Black 7), such as furnace blacks, lamp blacks, acetylene blacks, channel blacks, etc.; metals, such as copper, iron (C.I. Pigment Black 11), titanium oxide, etc.; and organic pigments, such as aniline blacks (C.I. Pigment Black 1), etc.

Specific examples of the pigments for chromatic inks include one or more pigments with various product numbers which are selected from the group consisting of C.I. Pigment Yellow, C.I. Pigment Orange, C.I. Pigment Red, C.I. Pigment Violet, C.I. Pigment Blue and C.I. Pigment Green.

The dyes that may be used herein are not particularly limited. As the dyes, there may be mentioned acid dyes, basic dyes, direct dyes, reactive dyes and the like. These dyes may be used alone or in combination of any two or more thereof.

Examples of the dyes include those dyes with various product numbers which are selected from the group consisting of C.I. Acid Yellow, C.I. Acid Red, C.I. Acid Blue, C.I. Acid Black, C.I. Food Black, C.I. Direct Yellow, C.I. Direct Red, C.I. Direct Blue, C.I. Direct Black, C.I. Reactive Red and C.I. Reactive Black.

In the case where the ink for ink-jet printing contains the pigment, the pigment is dispersed in a medium in the ink. As the configuration of the pigment in the ink for ink-jet printing, there may be mentioned a configuration in which the pigment is dispersed with a resin (hereinafter also referred to as a "pigment-dispersing resin") or a surfactant as a dispersant, or a configuration of a self-dispersive pigment in which the pigment is dispersed without using any dispersant. Among these configurations, as the configuration of the pigment in the ink for ink-jet printing, preferred is the configuration in which the pigment is dispersed with the pigment-dispersing resin.

The pigment-dispersing resin may be either a water-soluble resin or a water-insoluble resin.

The terms "water-soluble" and "water-insoluble" of the resin as used herein respectively mean that when the solubility in water of the resin that has been dried to a constant weight at 105 °C for 2 hours and then dissolved in 100 g of water at 25 °C until reaching a saturation concentration thereof, is more than 10 g, the resin is regarded as being "water-soluble", whereas when the solubility in water of the resin is not more than 10 g, the resin is regarded as being "water-insoluble". In addition, as described hereinlater, in the case where the resin contains anionic groups, the aforementioned solubility means a solubility in water of the resin whose anionic groups are neutralized completely (i.e., 100%) with sodium hydroxide.

More specifically, as the configuration of the pigment in the ink for ink-jet printing, from the viewpoint of improving dispersion stability of the pigment, preferred are (A) a configuration in which a water-soluble resin is adsorbed onto the surface of the pigment, (B) a configuration in which a water-soluble surfactant or a water-dispersible surfactant is adsorbed onto the surface of the pigment, (C) a configuration of a self-dispersible pigment in which a hydrophilic functional group is chemically or physically introduced into the surface of the pigment, and the pigment is dispersed without using any pigment-dispersing resin or surfactant, (D) a configuration in which the pigment is coated with a water-insoluble resin, and the like.

The pigments having the aforementioned configurations (A) to (D) preferably have anionic properties (anionicity). When the pigments have the anionicity, it is considered that since the polyvalent metal ion derived from the polyvalent metal salt contained in the treating solution electrostatically interacts with the anionicity on the surface of the pigment, it is possible to reduce dispersibility of the pigment present in the ink and aggregate the pigment in the ink, and as a result, it is possible to obtain a printed material having high image quality which is capable of exhibiting both of good dot spreadability and excellent image uniformity when using a low-permeability printing medium, and improve optical density of the resulting printed material when using a high-permeability printing medium. From the aforementioned viewpoints, in the configuration (A), the water-soluble resin preferably contains an anionic group; in the configuration (B), the water-soluble surfactant or the water-dispersible surfactant preferably contains an anionic group; in the configuration (C), the hydrophilic functional group introduced into the surface of the pigment preferably contains an anionic group; and in the configuration (D), the water-insoluble resin preferably contains an anionic group.

Examples of the anionic group include groups that are capable of releasing hydrogen ions upon dissociation thereof, such as a carboxy group (-COOM), a sulfonate group (-SO₃M), a phosphate group (-OPO₃M₂), etc., or dissociated ion forms of these groups (such as -COO⁻, -SO₃⁻, -OPO₃²⁻ and-OPO₃⁻M), etc. In the aforementioned chemical formulae, M represents a hydrogen atom, an alkali metal, ammonium or an organic ammonium.

Among these configurations of the pigment in the ink for ink-jet printing, from the viewpoint of lowering dispersibility of dispersoids present in the ink by the action of the polyvalent metal ion and exhibiting good aggregation effect of the dispersoids, from the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium, preferred is at least one configuration selected from the group consisting of the configuration (C) and the configuration (D), and more preferred is the configuration (D).

In the case where the configuration of the pigment in the ink for ink-jet printing is the configuration (D), examples of the configuration of the pigment coated with the water-insoluble resin include a configuration in which the pigment is enclosed (encapsulated) in the water-insoluble resin, a configuration in which the pigment is uniformly dispersed in the water-insoluble resin, a configuration in which the pigment is exposed on the surface of respective particles of the water-insoluble resin, a configuration in which the water-insoluble resin is adsorbed onto the pigment, and the like.

In the case where the configuration of the pigment in the ink for ink-jet printing is the configuration (D), it is preferred that the pigment be coated with the water-insoluble resin having a crosslinked structure. In the configuration in which the pigment is coated with the water-insoluble resin having a crosslinked structure, the water-insoluble resin preferably has such a structure that it contains a polymer component having a linear two-dimensional structure which may have a branched chain, and a component derived from a crosslinking agent. In such a crosslinked structure, it is considered that the polymer having the linear two-dimensional structure which may have a branched chain is formed into a three-dimensional structure in association with the component derived from a crosslinking agent.

In the case where the ink for ink-jet printing has the configuration (D), the water-insoluble resin used for dispersing the pigment as the pigment-dispersing resin is not particularly limited.

Specific examples of the water-insoluble resin include a (meth)acrylic resin, a styrene/(meth)acrylic resin, a maleic acid resin, a styrene/maleic acid resin, a urethane resin and a polyester resin. Among these resins, from the viewpoint of lowering dispersibility of dispersoids present in the ink by the action of the polyvalent metal ion derived from the polyvalent metal salt and readily controlling the aggregation effect of the dispersoids, from the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium, preferred is at least one resin selected from the group consisting of a (meth)acrylic resin, a styrene/(meth)acrylic resin, a urethane resin and a polyester resin, and more preferred is at least one resin selected from the group consisting of a (meth)acrylic resin and a styrene/(meth)acrylic resin.

The term "(meth)acrylic" used in the present specification means "acrylic" or "methacrylic".

The water-insoluble resin used herein may be either a synthesized product obtained by conventionally known methods, or a commercially available product. These water-insoluble resins may be used alone or in combination of any two or more thereof.

The number-average molecular weight of the pigment-dispersing resin is preferably not less than 5,000, more preferably not less than 7,000 and even more preferably not less than 10,000, and is also preferably not more than 100,000, more preferably not more than 50,000 and even more preferably not more than 30,000. The number-average molecular weight may be measured by the method described in Examples below.

The acid value of the pigment-dispersing resin is preferably not less than 5 mgKOH/g, more preferably not less than 50 mgKOH/g, even more preferably not less than 100 mgKOH/g, further even more preferably not less than 150 mgKOH/g and still further even more preferably not less than 200 mgKOH/g, and is also preferably not more than 800 mgKOH/g, more preferably not more than 500 mgKOH/g and even more preferably not more than 300 mgKOH/g.

The acid value of the pigment-dispersing resin may be measured by the method described in Examples below, but may also be calculated from a mass ratio of monomers constituting the resin.

### [Fixing Resin]

The ink for ink-jet printing may also contain a resin functioning as a fixing assistant (hereinafter also referred to as a "fixing resin"). The fixing resin being present in the ink for ink-jet printing is preferably in the form of a pigment-uncoating resin, and more preferably in the form of pigment-free resin particles.

The fixing resin is not particularly limited, and may be appropriately selected according to the applications as aimed. Specific examples of the fixing resin include a urethane resin, a polyester resin, a (meth)acrylic resin, a vinyl acetate-based resin, a styrene-based resin, a butadiene-based resin, a styrene/butadiene-based resin, a vinyl chloride-based resin, a styrene/(meth)acrylic resin and an acrylic silicone-based resin.

The resin in the form of particles as the fixing resin may be mixed with a coloring material, water, an organic solvent, etc., to obtain an ink. The fixing resin used herein may be either a synthesized product or a commercially available product. These fixing resins may be used alone or in combination of any two or more thereof.

### [Wax]

The ink for ink-jet printing may also contain a wax. From the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium, the ink preferably contains the wax.

The term "wax" as used in the present specification means an organic substance that is present in the form of a solid or a semi-solid at an ordinary temperature (25 °C), and transformed into a liquid state by heating. In this case, the "semi-solid state of the wax" means such a state that when applying a force to the wax, the wax is deformed and fluidized, but when applying no force to the wax, the wax is capable of maintaining a predetermined shape. In addition, the temperature at which the wax is transformed into a liquid state by heating, i.e., a so-called melting point of the wax, lies in the temperature range of 45 °C or higher.

The wax may be either a natural wax or a synthetic wax.

Examples of the natural wax include petroleum-based waxes, such as a paraffin wax, a microcrystalline wax, etc.; vegetable waxes, such as a carnauba wax, a candelilla wax, a rice wax, etc.; animal waxes, such as lanolin, a beeswax, etc.; and the like.

Examples of the synthetic wax include synthetic hydrocarbon-based waxes, such as a polyolefin wax, a Fischer-Tropsch wax, etc.; silicone-based waxes; modified waxes, such as a paraffin wax derivative, a montan wax derivative, a microcrystalline wax derivative, etc.; and the like. Among these synthetic waxes, preferred is the polyolefin wax obtained from an olefin-based monomer as a main component.

These waxes may be used alone or in combination of ay two or more thereof.

The ink for ink-jet printing preferably contains the wax in the form of a dispersion thereof (hereinafter also referred to as a "wax dispersion").

The wax dispersion is not particularly limited, and may be a dispersion prepared by emulsifying the wax with conventionally known surfactants. As the surfactants, there may be used a nonionic surfactant, an anionic surfactant, and the like.

Examples of the nonionic surfactant include ethyleneoxide adducts of higher alcohols, ethyleneoxide adducts of alkylated phenols, and the like.

Examples of the anionic surfactant include sulfuric acid ester salts or phosphoric acid ester salts obtained using ethyleneoxide adducts of higher alcohols as a base material; alkylated benzenesulfonic acid salts; and the like.

Among these wax dispersions, from the viewpoint of improving ejection stability of the ink and image fastness of the resulting printed material, etc., preferred is a nonionic wax dispersion prepared by emulsifying the wax with the nonionic surfactant, and more preferred is a nonionic polyolefin wax dispersion.

Examples of suitable commercially available products of the wax dispersion include "HYTEC E" series products available from Toho Chemical Industry Co., Ltd., "AQUACER" series products available from BYK-Chemie GmbH, "Cellozol" series products available from Chukyo Yushi Co., Ltd., "Chemipearl" series products available from Mitsui Chemicals, Inc., and the like.

### [Water]

The medium of the ink for ink-jet printing is preferably a water-based medium. More specifically, the ink for ink-jet printing is preferably a water-based ink containing water.

The term "water-based" as used herein means that water has a largest content on a mass basis among components contained in the medium of the ink for ink-jet printing.

By using the water-based medium as the medium of the ink for ink-jet printing, it is considered that the water-based medium contained in the ink is supplied to the printing medium treated with the treating solution, and the polyvalent metal salt precipitated on the printing medium is re-dissolved in the water-based medium, so that it is possible to obtain a printed material having high image quality which is capable of exhibiting both of good dot spreadability and excellent image uniformity when using a low-permeability printing medium, and improve optical density of the resulting printed material when using a high-permeability printing medium.

As the water contained in the ink for ink-jet printing, there is preferably used deionized water, ion-exchanged water or distilled water.

### [Water-Soluble Organic Solvent]

The ink for ink-jet printing may further contain a water-soluble organic solvent as the water-based medium. As the water-soluble organic solvent, there may be mentioned those compounds illustrated as to the water-soluble organic solvents used in the aforementioned treating solution, i.e., polyhydric alcohols; ethers, such as polyhydric alcohol alkyl ethers, polyhydric alcohol aryl ethers, etc.; nitrogen-containing heterocyclic compounds; amides; amines; sulfur-containing compounds; and the like.

Incidentally, from the viewpoint of attaining good environmental properties, the content of water in the water-based medium is preferably not less than 51% by mass, more preferably not less than 55% by mass, even more preferably not less than 60% by mass and further even more preferably not less than 65% by mass, and is also preferably not more than 95% by mass, more preferably not more than 90% by mass, even more preferably not more than 85% by mass and further even more preferably not more than 80% by mass.

The ink for ink-jet printing may also contain a surfactant, a defoaming agent, an antiseptic and mildew-proof agent, a rust preventive, a pH controller, etc., if required.

The content of the coloring material in the ink for ink-jet printing is preferably not less than 2% by mass, more preferably not less than 3% by mass and even more preferably not less than 4% by mass from the viewpoint of improving optical density of the resulting printed material, and is also preferably not more than 20% by mass, more preferably not more than 15% by mass and even more preferably not more than 10% by mass from the viewpoint of obtaining a printed material having high image quality which is capable of exhibiting both of good dot spreadability and excellent image uniformity when using a low-permeability printing medium.

In the case where the ink for ink-jet printing contains the pigment as the coloring material, the content of the pigment in the ink is preferably not less than 2% by mass, more preferably not less than 3% by mass and even more preferably not less than 4% by mass from the viewpoint of improving optical density of the resulting printed material, and is also preferably not more than 20% by mass, more preferably not more than 15% by mass and even more preferably not more than 10% by mass from the viewpoint of obtaining a printed material having high image quality which is capable of exhibiting both of good dot spreadability and excellent image uniformity when using a low-permeability printing medium.

In the case where the ink for ink-jet printing contains the pigment-dispersing resin, the content of the pigment-dispersing resin in the ink is preferably not less than 1% by mass, more preferably not less than 3% by mass and even more preferably not less than 6% by mass from the viewpoint of improving dispersion stability of the pigment as well as from the viewpoint of obtaining a printed material having high image quality which is capable of exhibiting both of good dot spreadability and excellent image uniformity when using a low-permeability printing medium, and is also preferably not more than 20% by mass, more preferably not more than 15% by mass and even more preferably not more than 10% by mass from the viewpoint of improving optical density of the resulting printed material.

In the case where the ink for ink-jet printing contains the pigment-dispersing resin, the mass ratio of the content of the pigment to the content of the pigment-dispersing resin [pigment/pigment-dispersing resin] in the ink is preferably not less than 0.30, more preferably not less than 0.50 and even more preferably not less than 0.70 from the viewpoint of improving optical density of the resulting printed material, and is also preferably not more than 1.00, more preferably not more than 0.90 and even more preferably not more than 0.80 from the viewpoint of improving dispersion stability of the pigment as well as from the viewpoint of obtaining a printed material having high image quality which is capable of exhibiting both of good dot spreadability and excellent image uniformity when using a low-permeability printing medium.

In the case where the ink for ink-jet printing contains the fixing resin, the content of the fixing resin in the ink is preferably not less than 0.5% by mass, more preferably not less than 1% by mass and even more preferably not less than 1.5% by mass from the viewpoint of obtaining a printed material having high image quality which is capable of exhibiting both of good dot spreadability and excellent image uniformity when using a low-permeability printing medium, and is also preferably not more than 15% by mass, more preferably not more than 10% by mass and even more preferably not more than 5% by mass from the viewpoint of improving optical density of the resulting printed material.

In the case where the ink for ink-jet printing contains the wax, the content of the wax in the ink is preferably not less than 0.3% by mass, more preferably not less than 0.5% by mass and even more preferably not less than 0.8% by mass, and is also preferably not more than 7% by mass, more preferably not more than 5% by mass and even more preferably not more than 3% by mass, from the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium.

In the case where the ink for ink-jet printing contains the water-soluble organic solvent, the content of the water-soluble organic solvent in the ink is preferably not less than 15% by mass, more preferably not less than 20% by mass and even more preferably not less than 25% by mass, and is also preferably not more than 45% by mass, more preferably not more than 40% by mass and even more preferably not more than 35% by mass, from the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium.

The content of water in the ink for ink-jet printing is preferably not less than 40% by mass, more preferably not less than 45% by mass, even more preferably not less than 50% by mass and further even more preferably not less than 55% by mass, and is also preferably not more than 75% by mass, more preferably not more than 70% by mass and even more preferably not more than 65% by mass, from the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium.

### [Ink-Jet Printing Method]

In the ink-jet printing method of the present invention, images are formed on a treated surface of a surface-treated printing medium that is treated with the aforementioned treating solution, in an ink-jet printing manner using the ink for ink-jet printing.

The ink-jet printing method of the present invention preferably includes the following step 1 and step 2.

Step 1: applying the aforementioned treating solution onto a printing medium to obtain a surface-treated printing medium; and

Step 2: forming images on a treated surface of the surface-treated printing medium obtained in the step 1 in an ink-jet printing manner using the ink for ink-jet printing.

### (Step 1)

The step 1 is the step of applying the aforementioned treating solution onto a printing medium to obtain a surface-treated printing medium.

In the present invention, the printing medium used in the step 1 may be either a low-permeability printing medium or a high-permeability printing medium.

Examples of the low-permeability printing medium include a low-water absorbing coated paper and a non-water absorbing resin film. Examples of the coated paper include a versatile glossy coated paper, a multicolor foam glossy coated paper and the like. As the resin film, there may be used at least one film selected from the group consisting of a polyester film, a polyvinyl chloride film, a polypropylene film and a polyethylene film. These resin films may be subjected to surface treatments, such as corona treatments, etc., upon used thereof.

As the high-permeability printing medium, there may be mentioned a high-water absorbing plain paper.

In the printing method of the present invention, in the case where a low-permeability printing medium is used as the printing medium to which the treating solution is applied in the step 1, the treating solution preferably contains, as the polyvalent metal salt, at least one metal salt selected from the group consisting of magnesium nitrate, magnesium sulfate and calcium nitrate, more preferably at least one metal salt selected from the group consisting of magnesium nitrate and calcium nitrate, and even more preferably magnesium nitrate, from the viewpoint of obtaining a printed material having high image quality which is capable of exhibiting both of good dot spreadability and excellent image uniformity.

In the printing method of the present invention, in the case where a high-permeability printing medium is used as the printing medium to which the treating solution is applied in the step 1, the treating solution preferably contains, as the polyvalent metal salt, at least one metal salt selected from the group consisting of magnesium nitrate, calcium nitrate and aluminum nitrate from the viewpoint of improving optical density of the resulting printed material.

The method of applying the treating solution onto the printing medium is not particularly limited. Examples of the method of applying the treating solution onto the printing medium include immersion, roller coating, spray coating, brush coating, coating by an ink-jet printing method, and the like.

Among these methods, from the viewpoint of being capable of applying the treating solution conveniently or uniformly, preferred is the roller coating method.

The roller coating method means (i) a method in which the treating solution is retained in a gap between the printing medium and a member that comes into contact with the printing medium, and one of the printing medium and the member that comes into contact with the printing medium is moved to allow the treating solution applied to a part of the printing medium to spread over a whole part of the printing medium, thereby obtaining the surface-treated printing medium that is treated with the aforementioned treating solution, or (ii) a method in which by allowing the printing medium and a member that comes into contact with the printing medium or adjacently disposed in such a state as spaced by a fine gap apart from the printing medium to rotate each other, the treating solution is impressed on the printing medium or the treating solution retained in the fine gap is absorbed onto the printing medium.

Specific examples of the roller used in the roller coating method include an offset gravure coater, a gravure coater, a doctor coater, a bar coater, a blade coater, a flexo coater and a roll coater. Among these coaters, preferred are one or more coaters selected from the group consisting of a doctor coater, a bar coater and a roll coater.

In addition, from the viewpoint of conducting the step 1 and the step 2 in a continuous manner, as the apparatus used for applying the treating solution onto the printing medium, there is preferably used an apparatus in which a means for applying the treating solution used in the step 1 is integrated with a means for applying the ink for ink-jet printing used in the step 2. In this case, there may be used, for example, such an apparatus in which the means for applying the treating solution, such as a roller coating device, etc., is incorporated in the below-mentioned ink-jet printing apparatus.

The amount of the treating solution applied onto the printing medium is preferably not less than 0.2 g/m², more preferably not less than 0.5 g/m² and even more preferably not less than 1 g/m² from the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium, and is also preferably not more than 5 g/m², more preferably not more than 2 g/m² and even more preferably not more than 1.8 g/m² from the same viewpoints as described above.

In the step 1, from the viewpoint of obtaining a printed material having high image quality which is capable of exhibiting both of good dot spreadability and excellent image uniformity when using a low-permeability printing medium as well as from the viewpoint of improving optical density of the resulting printed material when using a high-permeability printing medium, it is preferred that after applying the treating solution onto the printing medium, the treating solution on the printing medium be dried.

Examples of the drying method used in the step 1 include ventilation drying, fan drying, heat drying, reduced pressure drying and the like. In the printing method of the present invention, the application of activation energy rays, such as ultraviolet rays, radial rays, etc., is not involved in a concept of the drying as used in the present invention.

The drying temperature used in the step 1 is preferably not higher than 120 °C, more preferably not higher than 100 °C, even more preferably not higher than 90 °C and further even more preferably not higher than 80 °C from the viewpoint of inhibiting deformation of the printing medium, and is also preferably not lower than 20 °C and more preferably not lower than 25 °C from the viewpoint of drying the treating solution for a short period of time.

The drying time used in the step 1 is preferably not shorter than 0.5 minute and more preferably not shorter than 1 minute, and is also preferably not longer than 30 minutes, more preferably not longer than 20 minutes and even more preferably not longer than 10 minutes.

### (Step 2)

The step 2 is the step of forming images on a treated surface of the surface-treated printing medium obtained in the step 1 in an ink-jet printing manner using the ink for ink-jet printing.

The ink for ink-jet printing is loaded into a conventionally known ink-jet printing apparatus, and applied and adhered in the form of ink dots onto the treated surface of the surface-treated printing medium obtained in the step 1 to thereby form images thereon. As the ink-jet printing apparatus, there may be used any of an ink-jet printing apparatus of a thermal type, an ink-jet printing apparatus of a piezoelectric type and the like.

With respect to the aforementioned embodiments, the present invention further provides the following inventive aspects.
<1> A treating solution containing 1,4-cyclohexanedimethanol, a polyvalent metal salt and water.
<2> The treating solution according to the aspect <1>, wherein a polyvalent metal ion constituting the polyvalent metal salt is preferably a divalent or trivalent metal ion, more preferably a divalent metal ion, even more preferably at least one metal ion selected from the group consisting of a magnesium ion, a calcium ion and an aluminum ion, further even more preferably at least one metal ion selected from the group consisting of a magnesium ion and a calcium ion, and still further even more preferably a magnesium ion.
<3> The treating solution according to the aspect <1> or <2>, wherein an anion constituting the polyvalent metal salt is preferably an inorganic ion, more preferably at least one ion selected from the group consisting of a nitrate ion and a sulfate ion, and even more preferably a nitrate ion.
<4> The treating solution according to any one of the aspects <1> to <3>, wherein the polyvalent metal salt is preferably at least one metal salt selected from the group consisting of magnesium nitrate, magnesium sulfate, calcium nitrate and aluminum nitrate, more preferably at least one metal salt selected from the group consisting of magnesium nitrate, magnesium sulfate and calcium nitrate, even more preferably at least one metal salt selected from the group consisting of magnesium nitrate and calcium nitrate, and further even more preferably magnesium nitrate.
<5> The treating solution according to any one of the aspects <1> to <4>, wherein a content of the 1,4-cyclohexanedimethanol in the treating solution is preferably not less than 1% by mass, more preferably not less than 3% by mass, even more preferably not less than 5% by mass, further even more preferably not less than 10% by mass, still further even more preferably not less than 15% by mass, still further even more preferably not less than 20% by mass, still further even more preferably not less than 25% by mass and yet still further even more preferably not less than 30% by mass, and is also preferably not more than 65% by mass, more preferably not more than 60% by mass, even more preferably not more than 55% by mass, further even more preferably not more than 50% by mass, still further even more preferably not more than 45% by mass and yet still further even more preferably not more than 40% by mass.
<6> The treating solution according to any one of the aspects <1> to <5>, wherein a content of the polyvalent metal salt in the treating solution is preferably not less than 1% by mass, more preferably not less than 3% by mass, even more preferably not less than 5% by mass, further even more preferably not less than 10% by mass, still further even more preferably not less than 13% by mass and yet still further even more preferably not less than 15% by mass, and is also preferably not more than 30% by mass, more preferably not more than 25% by mass and even more preferably not more than 20% by mass.
<7> The treating solution according to any one of the aspects <1> to <6>, wherein a content of water in the treating solution is preferably not more than 85% by mass, more preferably not more than 80% by mass, even more preferably not more than 75% by mass, further even more preferably not more than 70% by mass, still further even more preferably not more than 65% by mass, still further even more preferably not more than 60% by mass and yet still further even more preferably not more than 55% by mass, and is also preferably not less than 15% by mass, more preferably not less than 20% by mass, even more preferably not less than 25% by mass, further even more preferably not less than 30% by mass, still further even more preferably not less than 35% by mass, still further even more preferably not less than 40% by mass and yet still further even more preferably not less than 45% by mass.
<8> The treating solution according to any one of the aspects <1> to <7>, wherein a mass ratio of the content of the polyvalent metal salt to the content of the 1,4-cyclohexanedimethanol [polyvalent metal salt/1,4-cyclohexanedimethanol] in the treating solution is preferably not less than 0.10, more preferably not less than 0.20, even more preferably not less than 0.30, further even more preferably not less than 0.35 and still further even more preferably not less than 0.40, and is also preferably not more than 4.00, more preferably not more than 3.20, even more more preferably not more than 3.00, further even more preferably not more than 2.20, still further even more preferably not more than 1.50, still further even more preferably not more than 1.00, still further even more preferably not more than 0.80 and yet still further even more preferably not more than 0.50.
<9> The treating solution according to any one of the aspects <1> to <8>, wherein a mass ratio of the content of the 1,4-cyclohexanedimethanol to the content of water [1,4-cyclohexanedimethanol/water] in the treating solution is preferably not less than 0.03, more preferably not less than 0.10, even more preferably not less than 0.30 and further even more preferably not less than 0.50, and is also preferably not more than 2.00, more preferably not more than 1.50, even more preferably not more than 1.00, further even more preferably not more than 0.90 and still further even more preferably not more than 0.80.
<10> The treating solution according to any one of the aspects <1> to <9>, wherein a content of a coloring material in the treating solution is preferably not more than 1% by mass, more preferably not more than 0.1% by mass, even more preferably not more than 0.01% by mass and further even more preferably 0% by mass.
<11> The treating solution according to any one of the aspects <1> to <10>, for treating a printing medium used in ink-jet printing.
<12> An ink set for ink-jet printing, containing the treating solution according to any one of the aspects <1> to <11>, and an ink that contains a coloring material and water.
<13> The ink set for ink-jet printing according to the aspect <12>, wherein the coloring material is a pigment, and a configuration of the pigment is preferably at least one configuration selected from the group consisting of (C) a configuration of a self-dispersible pigment in which a hydrophilic functional group is chemically or physically introduced onto a surface of the pigment, and the pigment is dispersed without using any of a pigment-dispersing resin and a surfactant, and (D) a configuration in which the pigment is coated with a water-insoluble resin, and more preferably the configuration (D) in which the pigment is coated with the water-insoluble resin.
<14> The ink set for ink-jet printing according to the aspect <13>, wherein the water-insoluble resin is preferably at least one resin selected from the group consisting of a (meth)acrylic resin, a styrene/(meth)acrylic resin, a urethane resin and a polyester resin, and more preferably at least one resin selected from the group consisting of a (meth)acrylic resin and a styrene/(meth)acrylic resin.
<15> The ink set for ink-jet printing according to the aspect <12>, wherein the coloring material is a pigment, and the pigment is present in such a configuration that the pigment is dispersed with a pigment-dispersing resin.
<16> The ink set for ink-jet printing according to the aspect <15>, wherein an acid value of the pigment-dispersing resin is preferably not less than 5 mgKOH/g, more preferably not less than 50 mgKOH/g, even more preferably not less than 100 mgKOH/g, further even more preferably not less than 150 mgKOH/g and still further even more preferably not less than 200 mgKOH/g, and is also preferably not more than 800 mgKOH/g, more preferably not more than 500 mgKOH/g and even more preferably not more than 300 mgKOH/g.
<17> The ink set for ink-jet printing according to any one of the aspects <12> to <16>, wherein the ink further contains a wax in the form of a dispersion thereof.
<18> The ink set for ink-jet printing according to any one of the aspects <13> to <17>, wherein a content of the pigment in the ink is preferably not less than 2% by mass, more preferably not less than 3% by mass and even more preferably not less than 4% by mass, and is also preferably not more than 20% by mass, more preferably not more than 15% by mass and even more preferably not more than 10% by mass.
<19> The ink set for ink-jet printing according to any one of the aspects <13> to <18>, wherein a mass ratio of the content of the pigment to a content of the pigment-dispersing resin [pigment/pigment-dispersing resin] in the ink is preferably not less than 0.30, more preferably not less than 0.50 and even more preferably not less than 0.70, and is also preferably not more than 1.00, more preferably not more than 0.90 and even more preferably not more than 0.80.
<20> The ink set for ink-jet printing according to any one of the aspects <17> to <19>, wherein a content of the wax in the ink is preferably not less than 0.3% by mass, more preferably not less than 0.5% by mass and even more preferably not less than 0.8% by mass, and is also preferably not more than 7% by mass, more preferably not more than 5% by mass and even more preferably not more than 3% by mass.
<21> An ink-jet printing method including the following step 1 and step 2 using the treating solution according to any one of the aspects <1> to <11>:
   Step 1: applying the treating solution onto a printing medium to obtain a surface-treated printing medium; and
   Step 2: forming images on a treated surface of the surface-treated printing medium obtained in the step 1 in an ink-jet printing manner using an ink that contains a coloring material and water.
<22> The ink-jet printing method according to the aspect <21>, wherein in the case where the printing medium to which the treating solution is applied in the step 1 is a low-permeability printing medium, the treating solution preferably contains, as the polyvalent metal salt, at least one metal salt selected from the group consisting of magnesium nitrate, magnesium sulfate and calcium nitrate, more preferably at least one metal salt selected from the group consisting of magnesium nitrate and calcium nitrate, and even more preferably magnesium nitrate.
<23> The ink-jet printing method according to the aspect <21> or <22>, wherein in the case where the printing medium to which the treating solution is applied in the step 1 is a high-permeability printing medium, the treating solution contains, as the polyvalent metal salt, at least one metal salt selected from the group consisting of magnesium nitrate, calcium nitrate and aluminum nitrate.
<24> A use of the treating solution according to any one of the aspects <1> to <11> for treating a printing medium used in ink-jet printing.

### EXAMPLES

In the following Production Examples, Examples and Comparative Examples, the "part(s)" indicates "part(s) by mass" unless otherwise specified. The various properties and characteristics were measured and calculated by the following methods.

### (1) Number-Average Molecular Weight of Pigment-Dispersing Resin

The number-average molecular weight of the pigment-dispersing resin was measured by gel permeation chromatography. As a sample to be measured, there was used a dispersion prepared by mixing 0.1 g of the resin with 10 mL of the below-mentioned eluent in a glass vial, stirring the resulting mixture at 25 °C for 10 hours with a magnetic stirrer, and then subjecting the mixture to filtration treatment using a syringe filter "DISMIC-13HP" (made of PTFE; 0.2 µm) available from TOYO ROSHI KAISHA, LTD. The measuring conditions are shown below.
GPC apparatus: "HLC-8320GPC" available from Tosoh Corporation;
Columns: "TSKgel Super AWM-H", "TSKgel Super AW3000" and "TSKgel guardcolumn Super AW-H" all available from Tosoh Corporation;
Eluent: A solution prepared by dissolving phosphoric acid and lithium bromide in *N,N-*dimethylformamide such that concentrations of phosphoric acid and lithium bromide in the resulting solution were 60 mmol/L and 50 mmol/L, respectively;
Flow rate: 0.5 mL/min; and
Reference standard substances: Kits of monodisperse polystyrenes having known molecular weights "PStQuick b (F-550, F-80, F-10, F-1, a-1000)" and "PStQuick c (F-288, F-40, F-4, A-5000, A-500)" all available from Tosoh Corporation.

### (2) Acid Value of Pigment-Dispersing Resin

The acid value of the pigment-dispersing resin was determined as follows. In an automatic potentiometric titrator (power burette; "Model No.: APB-610") available from Kyoto Electronics Manufacturing Co., Ltd., the resin was dissolved in a titrant solution prepared by mixing toluene and acetone (2:1), and the resulting solution was subjected to titration with a 0.1 N potassium hydroxide/ethanol solution by a potentiometric titration method until reaching an end point of the titration observed as an inflection point on the titration curve. The acid value (mgKOH/g) of the resin was calculated from an amount (titer) of the potassium hydroxide solution used in the titration until reaching the end point.

### (3) Solid Contents of Pigment Dispersion and Wax Dispersion

A 30 mL polypropylene container (φ: 40 mm; height: 30 mm) was accurately weighed. Sodium sulfate (reagent) available from FUJIFILM Wako Pure Chemical Corporation dried to constant weight in a desiccator was weighed and charged in an amount of about 10.0 g in the polypropylene container to accurately measure a mass of the sodium sulfate, and about 1 g of a pigment dispersion or a wax dispersion to be measured was added to the container, followed by mixing the contents of the container with each other. Thereafter, the mass of the pigment dispersion or the wax dispersion was accurately measured. Then, the resulting mixture was maintained in the container at 105 °C for 2 hours to remove volatile components therefrom, and further allowed to stand in a desiccator for 15 minutes to accurately measure a whole mass of the container inclusive of the contents thereof. The mass of residues of the pigment dispersion or the wax dispersion after removing the volatile components therefrom was calculated by subtracting a sum of the accurately measured value of the mass of the container itself and the accurately measured value of the mass of the sodium sulfate from the accurately measured value of the whole mass of the container inclusive of the contents thereof. The solid content of the pigment dispersion or the wax dispersion was calculated by dividing the mass of the residues of the pigment dispersion or the wax dispersion after removing the volatile components therefrom by the accurately measured value of the mass of the pigment dispersion or the wax dispersion before removing the volatile components therefrom.

### (4) Melting Point of Wax

The melting point of the wax was measured using an apparatus according to JIS K 0064. More concretely, the wax dispersion was dried and solidified to prepare a sample, and using a differential scanning calorimeter "DSC Q20" available from TA Instruments Japan Inc., the sample was heated up to 200 °C, and then cooled from 200 °C to 0 °C at a temperature drop rate of 10 °C/minute. Next, the sample was heated up to 200 °C at a temperature rise rate of 10 °C/minute to measure an amount of heat of melting thereof. Among the peaks of the heat of melting observed in the thus measured characteristic curve, the temperature of the peak having a largest peak area was regarded as a maximum peak temperature of the heat of melting, and the maximum peak temperature was defined as a melting point of the wax.

### (5) Average Particle Size of Pigment Dispersion

Using a laser particle analyzing system "ELS-8000" available from Otsuka Electronics Co., Ltd., particle sizes of pigment particles dispersed in the pigment dispersion were measured by a dynamic light-scattering method, and subjected to cumulant analysis to calculate an average particle size thereof.

The measurement was conducted under the conditions including a temperature of 25 °C, an angle between incident light and detector of 90° and a cumulative number of 100 times, and the refractive index of water (1.333) was input to the analyzing system as a refractive index of the dispersing medium. As the sample to measured, there was used a dispersion prepared by weighing the pigment dispersion in a screw vial No. 5 available from Maruemu Corporation, adding water to the dispersion such that a solid content of the dispersion was adjusted to 2 × 10⁻⁴% by mass, and stirring the resulting mixture with a magnetic stirrer at 25 °C for 1 hour.

### (6) Average Particle Size of Wax Dispersion

The average particle size (average dispersed particle size) of the wax dispersion was measured using a MICROTRAC particle size distribution analyzer "UPA" available from Nikkiso Co., Ltd.

### (7) Viscosity of Treating Solution

The viscosity of the treating solution was measured at 25 °C using an E-type viscometer "Model No.: TV-25" (equipped with a standard cone rotor (1°34' x R24); rotating speed: 50 rpm) available from Toki Sangyo Co., Ltd.

### (8) pH of Treating Solution

The pH value of the treating solution was measured at 20 °C using a bench-top pH meter "F-71" available from Horiba Ltd., equipped with a pH electrode "6337-10D" available from Horiba Ltd.

### Production Example 1-1 (Production of Pigment-Dispersing Resin (1))

Thirty one parts of acrylic acid (reagent) available from FUJIFILM Wako Pure Chemical Corporation and 69 parts of styrene (reagent) available from FUJIFILM Wako Pure Chemical Corporation were mixed with each other to prepare a monomer mixture solution.

Ten parts of methyl ethyl ketone (reagent; hereinafter also referred to as "MEK") available from FUJIFILM Wako Pure Chemical Corporation, 0.2 part of a polymerization chain transfer agent (2-mercaptoethanol; reagent) available from FUJIFILM Wako Pure Chemical Corporation, 10% by mass of the monomer mixture solution prepared above were charged into a reaction container and mixed with each other, and then an inside atmosphere of the reaction container was fully replaced with nitrogen gas.

Separately, a mixed solution prepared by mixing remaining 90% by mass of the aforementioned monomer mixture solution, 0.13 part of the aforementioned polymerization chain transfer agent, 30 parts of MEK, and 1.1 parts of a radical polymerization initiator "V-65" (tradename; 2,2'-azobis(2,4-dimethylvaleronitrile)) available from FUJIFILM Wako Pure Chemical Corporation, was charged into a dropping funnel. In a nitrogen atmosphere, the monomer mixed solution in the reaction container was heated to 65 °C while stirring, and then the mixed solution in the dropping funnel was added dropwise into the reaction container over 3 hours. After the elapse of 2 hours from completion of the dropwise addition while maintaining the resulting mixed solution at 65 °C, a solution prepared by dissolving 0.1 part of the aforementioned polymerization initiator in 2 parts of MEK was added to the reaction container, and the resulting reaction solution was further aged at 65 °C for 2 hours and then at 70 °C for 2 hours, followed by drying the resulting mixture under reduced pressure, thereby obtaining, as a pigment-dispersing resin (1), an acrylic acid/styrene copolymer (number-average molecular weight: 19,000; acid value: 240 mgKOH/g) (hereinafter also referred to as the "pigment-dispersing resin (1)").

### Production Example 2-1 (Production of Cyan Ink 1 for Ink-Jet Printing)

One hundred parts of the pigment-dispersing resin (1) obtained in Production Example 1-1 and 78.6 parts of MEK were mixed together, and the resulting mixture was further mixed with 41.2 parts of a 5 N sodium hydroxide aqueous solution (for volumetric analysis; sodium hydroxide content: 16.9% by mass) available from FUJIFILM Wako Pure Chemical Corporation as a neutralizing agent to subject the resin to neutralization treatment (neutralization degree: 40 mol%). Then, the obtained mixed solution was mixed with 800 parts of deionized water, and 100 parts of a cyan pigment "TGR-SD" (tradename; C.I. Pigment Blue 15:3) available from DIC Corporation were further added thereto. The resulting dispersion was stirred at 20 °C for 60 minutes using a disper "ULTRA DISPER" (tradename) available from Asada Iron Works Co., Ltd., under the condition of operating blades of the disper at a rotating speed of 7000 rpm, thereby obtaining a pigment mixture.

The resulting pigment mixture was subjected to dispersion treatment under a pressure of 200 MPa using "Microfluidizer" (tradename) available from Microfluidics International Corporation by passing the mixture through the device 10 times, thereby obtaining a cyan pigment dispersion liquid.

The thus obtained cyan pigment dispersion liquid was mixed with 250 parts of deionized water, and the resulting mixture was stirred. Then, MEK was completely removed from the mixture under reduced pressure at 60 °C, followed by further removing a part of water therefrom. Thereafter, 35.7 parts of trimethylolpropane polyglycidyl ether "DENACOL EX-321" (tradename; epoxy equivalent: 140) available from Nagase ChemteX Corporation as a crosslinking agent were added to the mixture, followed by hermetically sealing a reaction container thus filled. The contents of the reaction container were heated at 70 °C for 5 hours while stirring with a stirrer, and then cooled to room temperature. The obtained dispersion was mixed with deionized water such that the solid content of the dispersion was adjusted to 24% by mass, and then subjected to filtration treatment through a 5 µm-pore size filter (acetyl cellulose membrane; outer diameter: 2.5 cm) available from FUJIFILM Wako Pure Chemical Corporation, thereby obtaining a cyan pigment dispersion (crosslinking rate: 60 mol%; average particle size: 102 nm).

Fifty parts of the thus obtained cyan pigment dispersion, 2.9 parts of a polyethylene wax dispersion "HYTEC E-6500" (tradename; ionic species: nonionic; melting point of wax: 140 °C; solid content: 35% by mass) available from TOHO Chemical Industry Co., Ltd., 19 parts of 1,2-propanediol (reagent) available from FUJIFILM Wako Pure Chemical Corporation, 8 parts of ethylene glycol monobutyl ether (reagent) available from FUJIFILM Wako Pure Chemical Corporation, and 0.5 part of 2,4,7,9-tetramethyl-5-decyne-4,7-diol "SURFYNOL 104" (tradename) available from Air Products & Chemicals, Inc., as an acetylene glycol-based surfactant were mixed with each other, followed by adding deionized water to the resulting dispersion such that a total amount of the dispersion was 100 parts. The thus obtained dispersion was subjected to filtration treatment through a 5 µm-pore size filter (acetyl cellulose membrane; outer diameter: 2.5 cm) available from FUJIFILM Wako Pure Chemical Corporation, thereby obtaining a cyan ink 1 for ink-jet printing (solid content: 13% by mass; content of pigment: 5% by mass; content of pigment-dispersing resin: 7% by mass; content of wax: 1% by mass).

### Production Example 2-2 (Production of Magenta Ink 2 for Ink-Jet Printing)

The same procedure as in Production Example 2-1 was repeated except that a magenta pigment "FASTOGEN Super Magenta RGT" (tradename; C.I. Pigment Red 122) available from DIC Corporation was used in place of the cyan pigment, thereby obtaining a magenta ink 2 for ink-jet printing.

### Preparation Example 1 (Preparation of Treating Solution 1)

The respective components of the treating solution having the following formulated composition were added to a reaction container equipped with a stirrer, and mixed with each other at 25 °C for 1 hour. The obtained mixture was subjected to filtration treatment using a 25 mL-capacity needleless syringe available from Terumo Corporation fitted with a 5 µm-pore size filter (acetyl cellulose membrane; outer diameter: 2.5 cm) available from FUJIFILM Wako Pure Chemical Corporation, thereby obtaining a treating solution 1. The thus obtained treating solution 1 had a pH value of 4.7 as measured at 20 °C.

### [Formulated Composition of Treating Solution 1]

| | |
|---|---|
| 1,4-Cyclohexanedimethanol available from Eastman Chemical Company | 35.0 parts |
| Magnesium nitrate hexahydrate (reagent) available from Tokyo Chemical Industry Co., Ltd. | 25.9 parts |
| Deionized water | 39.1 parts |

### Preparation Examples 2 to 9 and Comparative Preparation Example 1

### (Preparation of Treating Solutions 2 to 9 and C1)

The same procedure as in Preparation Example 1 was repeated except that the formulated composition of the treating solution was changed to those shown in Table 1, thereby obtaining respective treating solutions.

The organic solvent and polyvalent metal salts used in the Preparation Examples other than Preparation Example 1 are shown below.

### [Organic Solvent]

- Glycerin (concentrated glycerin for cosmetics) available from Kao Corporation

### [Polyvalent Metal Salt]

- Magnesium sulfate heptahydrate (reagent) available from Tokyo Chemical Industry Co., Ltd.
- Calcium nitrate tetrahydrate (reagent) available from Tokyo Chemical Industry Co., Ltd.
- Aluminum nitrate nonahydrate (reagent) available from Tokyo Chemical Industry Co., Ltd.

### Example 1

Using a wireless bar coater "A-Bar" (Model No.: OSP-1; pitch: 0.08 mm; depth: 4 µm; film thickness: 1.5 µm/wet) available from Mitsui Electric Co., Ltd., a coated paper "OK Topcoat +" (basis weight: 127.9 g/m²; absorption of pure water as measured for a contact time of 100 msec: 4.9 g/m²) available from Oji Paper Co., Ltd., as a low-permeability printing medium was uniformly coated with the treating solution 1 and then allowed to stand under the environmental conditions of 25 °C and 50% RH for 10 minutes to dry the treating solution, thereby obtaining a surface-treated low-permeability printing medium. The amount of the treating solution 1 applied was controlled so as to lie within the range of 1.6±0.3 g/m².

Separately, the same procedure as mentioned above for preparation of the surface-treated low-permeability printing medium was repeated except that a wood-free plain paper "NPi Form Next-IJ" (basis weight: 81.4 g/m²; absorption of pure water as measured for a contact time of 100 msec: 9.9 g/m²) available from Nippon Paper Industries Co., Ltd., as a high-permeability printing medium was used in place of the coated paper, in which the plain paper was uniformly coated with the treating solution 1 and then allowed to stand under the environmental conditions of 25 °C and 50% RH for 10 minutes to dry the treating solution, thereby obtaining a surface-treated high-permeability printing medium.

Using the thus obtained surface-treated low-permeability printing medium and surface-treated high-permeability printing medium, according to the below-mentioned methods (1) to (3), images were formed thereon by an ink-jet printing method using the aforementioned cyan ink or the aforementioned magenta ink, and the resulting printed materials were evaluated for their properties. The results are shown in Table 1.

### Examples 2 to 9 and Comparative Example 1

The same procedure as in Example 1 was repeated except that respective treating solutions shown in Table 1 were used in place of the treating solution 1, thereby obtaining respective surface-treated low-permeability printing media and respective surface-treated high-permeability printing media.

Using the thus obtained surface-treated low-permeability printing media and surface-treated high-permeability printing media, according to the below-mentioned methods (1) to (3), images were formed thereon by an ink-jet printing method using the aforementioned cyan ink or the aforementioned magenta ink, and the resulting printed materials were evaluated for their properties. The results are shown in Table 1.

### <Evaluation>

### (1) Evaluation of Dot Spreadability

The images were formed on the surface-treated low-permeability printing medium using the cyan ink 1 for ink-jet printing by the following ink-jet printing method.

### (Printing by Ink-Jet Printing Method)

Under the environmental conditions of a temperature of 25±1 °C and a relative humidity of 30±5%, the cyan ink 1 for ink-jet printing was loaded into a print evaluation apparatus available from Tritek Co., Ltd., equipped with an ink-jet print head "KJ4B-HD06MHG-STDV" (piezoelectric type) available from KYOCERA Corporation.

The operating conditions of the print evaluation apparatus were set to a print head voltage of 26 V, a frequency of 20 kHz, an ejected liquid droplet amount of 12 pL, a print head temperature of 32 °C, a resolution of 600 dpi and a negative pressure of -4.0 kPa. The surface-treated low-permeability printing medium was fixedly mounted to a transportation table of the apparatus under reduced pressure such that the longitudinal direction of the surface-treated low-permeability printing medium was aligned with a transportation direction thereof. A printing command was transmitted to the aforementioned print evaluation apparatus to print Duty 2% images of the cyan ink on the printing medium. The dot diameter (dot size) of the ink in the images printed was measured under the conditions of a threshold value of 50%, a minimum dot diameter of 10 µm and a maximum dot diameter of 100 µm using a handy-type image evaluation system "PIAS (registered trademark)-II" available from Quality Engineering Associates (QEA) Inc., and evaluated according to the following evaluation ratings. The larger the dot diameter becomes, the more excellent the dot spreadability is, and the more excellent the image quality is. When the evaluation result is Rank A, B or C, the dot spreadability of the ink is practically acceptable.

### (Evaluation Ratings)

A: The dot diameter was not less than 60 µm.
B: The dot diameter was not less than 57.5 µm and less than 60 µm.
C: The dot diameter was not less than 55 µm and less than 57.5 µm.
D: The dot diameter was less than 55 µm.

### (2) Evaluation of Image Uniformity

The images were formed on the surface-treated low-permeability printing medium using the cyan ink 1 for ink-jet printing and the magenta ink 2 for ink-jet printing by the following ink-jet printing method.

### (Printing by Ink-Jet Printing Method)

Under the environmental conditions of a temperature of 25±1 °C and a relative humidity of 30±5%, the cyan ink 1 for ink-jet printing and the magenta ink 2 for ink-jet printing were loaded into a print evaluation apparatus available from Tritek Co., Ltd., equipped with an ink-jet print head "KJ4B-HD06MHG-STDV" (piezoelectric type) available from KYOCERA Corporation.

The operating conditions of the print evaluation apparatus were set to a print head voltage of 26 V, a frequency of 20 kHz, an ejected liquid droplet amount of 12 pL, a print head temperature of 32 °C, a resolution of 600 dpi and a negative pressure of -4.0 kPa. The surface-treated low-permeability printing medium was fixedly mounted to a transportation table of the apparatus under reduced pressure such that the longitudinal direction of the surface-treated low-permeability printing medium was aligned with a transportation direction thereof. A printing command was transmitted to the aforementioned print evaluation apparatus to print Duty 60% images of the cyan ink and Duty 60% images of the magenta ink, respectively, i.e., Duty 120% images in total, on the printing medium. As to the image uniformity of the portion of the printing medium on which the images were printed, the value of L* Graininess thereof was measured using a handy-type image evaluation system "PIAS (registered trademark)-II" available from Quality Engineering Associates (QEA) Inc., and evaluated according to the following evaluation ratings. As the value of L* Graininess becomes smaller, the color bleeding between the dots is inhibited to a higher extent, and the image quality is more excellent. When the evaluation result is Rank A, B or C, the image uniformity is practically acceptable.

### (Evaluation Ratings)

A: The value of L* Graininess was less than 1.5.
B: The value of L* Graininess was not less than 1.5 and less than 2.1.
C: The value of L* Graininess was not less than 2.1 and less than 2.5.
D: The value of L* Graininess was not less than 2.5.

### (3) Evaluation of Optical density

The images were formed on the surface-treated high-permeability printing medium using the cyan ink 1 for ink-jet printing by the following ink-jet printing method.

### (Printing by Ink-Jet Printing Method)

Under the environmental conditions of a temperature of 25±1 °C and a relative humidity of 30±5%, the cyan ink 1 for ink-jet printing was loaded into a print evaluation apparatus available from Tritek Co., Ltd., equipped with an ink-jet print head "KJ4B-HD06MHG-STDV" (piezoelectric type) available from KYOCERA Corporation.

The operating conditions of the print evaluation apparatus were set to a print head voltage of 26 V, a frequency of 20 kHz, an ejected liquid droplet amount of 12 pL, a print head temperature of 32 °C, a resolution of 600 dpi and a negative pressure of -4.0 kPa. The surface-treated high-permeability printing medium was fixedly mounted to a transportation table of the apparatus under reduced pressure such that the longitudinal direction of the surface-treated high-permeability printing medium was aligned with a transportation direction thereof. A printing command was transmitted to the aforementioned print evaluation apparatus to print Duty 100% images of the ink on the printing medium. The resulting printed material was allowed to stand for one day. Thereafter, using a spectrophotometer/densitometer "X-Rite eXact" available from X-Rite Inc., the optical density of the thus printed images was measured at optional 5 positions thereof under the following conditions: light source: D₅₀; observation viewing angle: 2°; CIE color system; filter "T". Then, the average value of the thus measured five optical density values was calculated as an optical density of the resulting printed material to evaluate the optical density according to the following evaluation ratings. The higher the value of the optical density becomes, the more excellent the optical density of the printed material is. When the evaluation result is Rank A, B or C, the optical density is practically acceptable.

### (Evaluation Ratings)

A: The optical density was not less than 1.18.
B: The optical density was not less than 1.13 and less than 1.18.
C: The optical density was not less than 1.08 and less than 1.13.
D: The optical density was less than 1.08.

### [Table 1]

**Table 1**

| | | | Examples | | | | | | | | | Comp. Ex. |
|---|---|---|---|---|---|---|---|---|---|---|---|---|
| | | | 1 | 2 | 3 | 4 | 5 | 6 | 7 | 8 | 9 | 1 |
| Kind of treating solution | | | 1 | 2 | 3 | 4 | 5 | 6 | 7 | 8 | 9 | C1 |
| Formulated composition of treating solution (part(s)) | Organic solvent | 1,4-Cyclohexanedimethanol | 35.0 | 55.0 | 5.0 | 35.0 | 35.0 | 5.0 | 35.0 | 35.0 | 5.0 | |
| | | (Glycerin) | | | | | | | | | | (35.0) |
| | Polyvalent metal salt*¹ | Mg(NO₃)₂•6H₂O | 25.9 | 25.9 | 25.9 | | | | 43.2 | 8.6 | 17.9 | 25.9 |
| | | MgSO₄•7H₂O | | | | | | 20.5 | | | | |
| | | Ca(NO₃)₂•4H₂O | | | | 21.6 | | | | | | |
| | | Al(NO₃)₃•9H₂O | | | | | 26.4 | | | | | |
| | Water | Deionized water | 39.1 | 19.1 | 69.1 | 43.4 | 38.6 | 74.5 | 21.8 | 56.4 | 77.1 | 39.1 |
| Contents of respective components in treating solution (% by mass) | 1,4-Cyclohexanedimethanol | | 35.0 | 55.0 | 5.0 | 35.0 | 35.0 | 5.0 | 35.0 | 35.0 | 5.0 | 0.0 |
| | (Glycerin) | | | | | | | | | | | (35.0) |
| | Polyvalent metal salt | | 15.0 | 15.0 | 15.0 | 15.0 | 15.0 | 10.0 | 25.0 | 5.0 | 10.4 | 15.0 |
| | Water | | 50.0 | 30.0 | 80.0 | 50.0 | 50.0 | 85.0 | 40.0 | 60.0 | 84.6 | 50.0 |
| Mass ratio [polyvalent metal salt/1,4-cyclohexanedimethanol] | | | 0.43 | 0.27 | 3.00 | 0.43 | 0.43 | 2.00 | 0.71 | 0.14 | 2.07 | - |
| Viscosity of treating solution (mPa•s) | | | 13 | 53 | 2 | 11 | 13 | 2 | 36 | 6 | 2 | 7 |
| Evaluation of dot spreadability upon printing using low-permeability printing medium | | | A | A | C | B | C | A | B | A | B | D |
| Evaluation of image uniformity upon printing using low-permeability printing medium | | | A | B | C | B | C | B | B | C | B | D |
| Evaluation of optical density upon printing using high-permeability printing medium | | | A | C | A | A | A | B | A | C | A | B |

| | | | | | | | | | | | | |
|---|---|---|---|---|---|---|---|---|---|---|---|---|
| Note *1: The amount (part(s)) of the polyvalent metal salt formulated is on an as-is basis. | | | | | | | | | | | | |

From Table 1, it was confirmed that in Examples 1 to 9, it was possible to obtain a printed material having high image quality which was capable of exhibiting both of good dot spreadability and good image uniformity when conducting the printing using a low-permeability printing medium, and obtain a printed material having high optical density when conducting the printing using a high-permeability printing medium, as compared to Comparative Example 1.

## Claims

1. A treating solution comprising 1,4-cyclohexanedimethanol, a polyvalent metal salt and water.

2. The treating solution according to claim 1, wherein a polyvalent metal ion constituting the polyvalent metal salt is a divalent metal ion.

3. The treating solution according to claim 1 or 2, wherein the polyvalent metal salt is at least one metal salt selected from the group consisting of magnesium nitrate, magnesium sulfate, calcium nitrate and aluminum nitrate.

4. The treating solution according to any one of claims 1 to 3, wherein a content of the 1,4-cyclohexanedimethanol in the treating solution is not less than 3% by mass and not more than 65% by mass.

5. The treating solution according to any one of claims 1 to 4, wherein a content of the polyvalent metal salt in the treating solution is not less than 3% by mass and not more than 30% by mass.

6. The treating solution according to any one of claims 1 to 5, wherein a content of water in the treating solution is not less than 15% by mass and not more than 85% by mass.

7. The treating solution according to any one of claims 1 to 6, wherein a mass ratio of the content of the polyvalent metal salt to the content of the 1,4-cyclohexanedimethanol [polyvalent metal salt/1,4-cyclohexanedimethanol] is not less than 0.10 and not more than 4.00.

8. The treating solution according to any one of claims 1 to 7, wherein a mass ratio of the content of the 1,4-cyclohexanedimethanol to the content of the water [1,4-cyclohexanedimethanol/water] is not less than 0.03 and not more than 2.00.

9. The treating solution according to any one of claims 1 to 8, wherein a content of a coloring material in the treating solution is not more than 1% by mass.

10. The treating solution according to any one of claims 1 to 9, for treating a printing medium used in ink-jet printing.

11. An ink set for ink-jet printing, comprising the treating solution according to any one of claims 1 to 10, and an ink that comprises a coloring material and water.

12. The ink set for ink-jet printing according to claim 11, wherein the coloring material is a pigment, and the pigment is present in such a configuration that the pigment is dispersed in the ink with a pigment-dispersing resin.

13. The ink set for ink-jet printing according to claim 12, wherein an acid value of the pigment-dispersing resin is not less than 100 mgKOH/g and not more than 800 mgKOH/g.

14. An ink-jet printing method comprising the following step 1 and step 2 using the treating solution according to any one of claims 1 to 10:
Step 1: applying the treating solution onto a printing medium to obtain a surface-treated printing medium; and
Step 2: forming images on a treated surface of the surface-treated printing medium obtained in the step 1 in an ink-jet printing manner using an ink that comprises a coloring material and water.

15. A use of the treating solution according to any one of claims 1 to 10 for treating a printing medium used in ink-jet printing.
